# EUROPEAN PATENT APPLICATION

(11) **EP 3 171 246 A1**
(43) Date of publication of application: **24.05.2017**
(21) Application number: 15195200.9
(22) Date of filing: 18.11.2015
(51) Int. Cl.: G06F 3/01, G06Q 50/00, H04M 1/725, G08B 1/08, H04M 1/22

(54) **METHOD OF IMPROVED FINDING SOMEONE OR SOMETHING WITHIN A LARGER GROUP OF PEOPLE OR THINGS**

(71) Applicant: Siemens Aktiengesellschaft, 80333 München (DE)
(72) Inventor: Johnson, Rebecca, 81825 München (DE); MacWilliams, Asa, 82256 Fürstenfeldbruck (DE)

(57) **Abstract**

In particular, the gist of the invention is the following: A method of improved finding someone or something within a larger group of people or things by providing a user with a first smart device and a target to be found with a second smart device, establishing a communication channel between both of them, providing a visual cue at the target which is visible to the user, sending parameters of this provided visual cue via the communication channel to the user, receiving the parameters of the visual cue and producing a haptic cue at the first smart device of the user which is synchronous to the visual cue and identifying the right target by synchronous cues. The method is discreet, easy to set up, easy to use, robust, provides better targeting and can be used with common hardware.

## Description

### Technical Field

The present disclosure relates to the field of finding or locating methods and their implementation in connection with smart devices like smart phones etc. and specifically to a method of finding someone or something within a larger group of people or things by using of smart devices.

This could mean trying to identify your lunch date in a crowd of other people; finding the right valve to open in an industrial plant; finding the correct part to pick off a shelf in a logistics or assembly task; or recognizing the taxi that is reserved for you.

### Background Art

Such a method is at least known from an article of MailOnline, Published 12 February 2015, Sarah Griffiths, "Never lose a friend in the crowd again! App transforms phones into attention grabbing flashing beacons of light", (http://www.dailymail.co.uk/sciencetech/article-2950933/Never-lose-friend-crowd-App-transforms-phones-attention-grabbing-flashing-beacons-light.html)

The article teaches that users must pick the color of the light they want, then send their missing friend a message, saying 'look for a blue flashing light,' for example. They then simply wave their phone, the screen of which has been turned into a flashing colored light, until they attract a friend's attention.

A problem may be here, e. g. that there may be lots of the same color flashing handsets.

The US Patent Application US 2007 /0069889 A1 provides a simple miniaturized electronic device that enables individuals to find a friend, a mate or someone with a specific interest or skill. In one embodiment, a man or a woman may program a MateFinder™ to help find an ideal match.
Information that describes both the user and the ideal match can be written to the non-volatile memory. The radio automatically and periodically broadcasts a "seeking signal" over a short range. When the seeking signal is received by another MateFinder™, it is analyzed to determine the degree of correlation with the receiver's preferences.
If the degree of correlation exceeds a preset minimum, the sender, the receiver, or both are alerted.

This solution might be more precise, however, it uses special electronic devices providing a visible or audible alert and cumbersome typing or programming in order to use this method is required.

Therefore, there is a need for a method of improved finding someone or something within a larger group of people or things, which is more selective and discreet for the user and which uses common hardware and is easy to operate.

According to the invention this need is settled by a method as it is defined by the features of independent claim 1. Preferred embodiments, an appropriate computer program product and a synchronizing device are subject of the dependent claims.

### Summary of the invention

In particular, the gist of the invention is the following: A method of improved finding someone or something within a larger group of people or things by providing a user with a first smart device and a target to be found with a second smart device, establishing a communication channel between both of them, providing a visual cue at the target which is visible to the user, sending parameters of this provided visual cue via the communication channel to the user, receiving the parameters of the visual cue and producing a haptic cue at the first smart device of the user which is synchronous to the visual cue and identifying the right target by synchronous cues. The method is discreet, easy to set up, easy to use, robust, provides better targeting and can be used with common hardware.

### Brief Description of the Drawings

The method and the computer program according to the invention are described in more detail herein below by way of an exemplary embodiment and with reference to the attached drawings, in which:
**Fig. 1** shows a schematic diagram illustrating the basic idea of the invention;
**Fig. 2** shows a schematic diagram illustrating a first embodiment of the invention and
**Fig. 3** shows a schematic diagram illustrating a second embodiment of the invention.

### Detailed description of exemplary embodiments

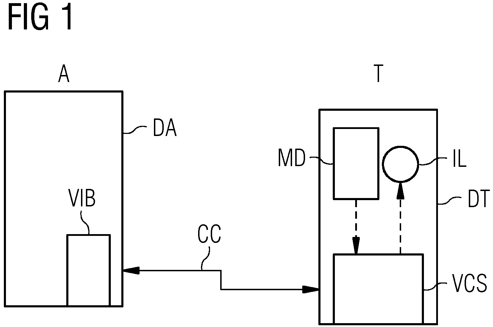

In **Fig. 1** a schematic diagram is illustrating the basic idea of the invention and is showing a user A with a first smart device DA and a target T with a second smart device DT.

The first smart device DA is typically a wearable device such as a smartwatch or alternatively a smartphone on the body of the person who is searching. The second smart device DT has a visual cue synchronizer device VCS, which is typically an embedded controller associated with the target respectively with the person or thing the user is looking for.

From the user's point of view, it works as follows:
- The user looks around, and sees several things or people, but does not know which of them is his desired target;
- One or more of the things or people move, wave, light up, change color, or otherwise provide some sort of short visual cue. One is the desired target T.
- Whenever the target T provides its visual cue, the user's wearable device vibrates, taps or gives some other short haptic cue to the user;
- By observing the different people/things in turn, seeing their visual cues, and feeling whether their rhythm matches the haptic rhythm of his wearable, the user can discern which of the people/things is the target.

From a technical point of view, the invention works as follows:
- The user A is wearing or holding the first smart device DA which is containing at least one vibration motor VIB or other haptic feedback actuators;
- The target T, in other words another person or object to be found, has the visual cue synchronizer VCS associated with it or attached to it. This is a device which either
   ▪ Artificially induces a visual cue by blinking or otherwise changing illumination IL , or
   ▪ Observes a visual cue of the target by using a motion detector MD, such as motion sensor, accelerometer, camera or other sensor.
   In any case, the visual cue synchronizer device VCS knows when the target provides a visual cue, i.e. does something that the user could notice with his eyes;
- The visual cue synchronizer device VCS sends a signal over a communication channel CC, whenever it registers a visual cue. The signal identifies either the user A, the target T to be found, or a common numeric identifier known to both the first smart device DA and the visual cue synchronizer device VCS of the second smart device DT.

The signal optionally indicates the direction and/or intensity of the motion.
- The smartwatch/wearable receives the signal from the visual cue synchronizer, either directly via wireless communication, or via an intermediate network which should have a low latency.
- The smartwatch/wearable vibrates, buzzes, taps, or provides some other haptic cue to the user.

Optionally it can use two different actuator locations or directions for a "left" and "right" motion associated with directional visual cues, and adjust the intensity of the haptic sensation to the intensity of the visual cue.

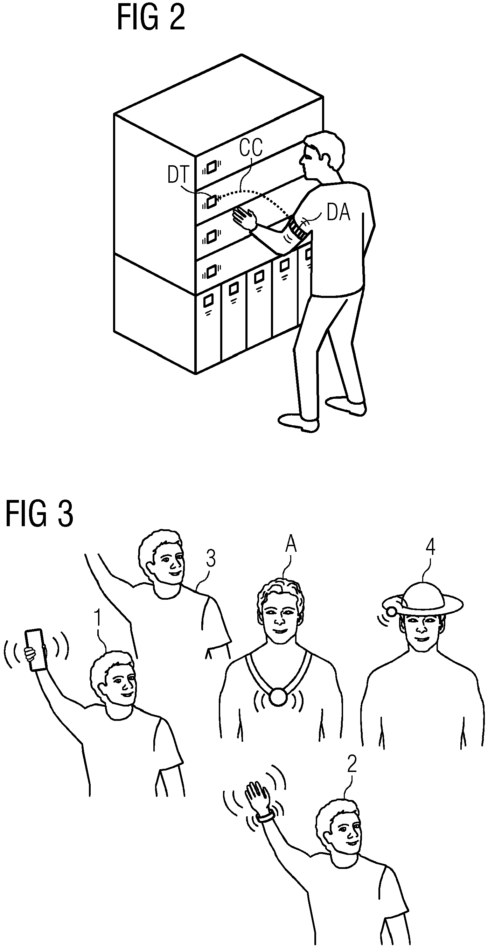

As a use case of the invention, consider the user shown in **Fig. 2****.** He is trying to identify one of several servers - in other words his target device DT - in a server rack. The user's wearable arm cuff DA pulses in sync with the Ethernet LED of the correct server. By observing the LEDs and feeling the pulses of the arm cuff DA, the user can find the target server.

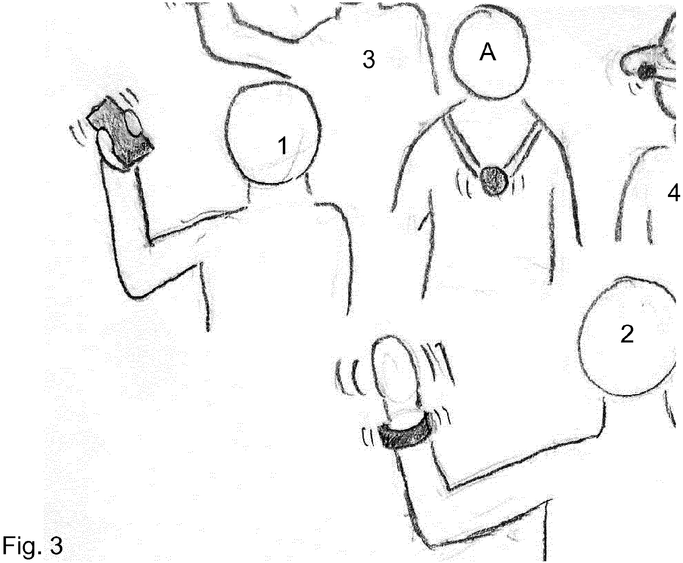

As another use case or embodiment of the invention, consider the user A shown in **Fig. 3** with the vibrating necklace. She is trying to identify one of several other people 1..4, one of whom she has a lunch date with but has never met before. Three other users are waving, one with a smartwatch, and one with a smartphone. Her necklace vibrates when the user with the smartwatch waves, but not when the user 1 with the smartphone waves. She concludes, correctly, that the person with the smartwatch is her desired lunch date.

In a further use case, two users, A and B, are both using the invention simultaneously - A to find B, and B to find A. As A waves his phone, B's phone vibrates, and vice versa.

In a further embodiment of the invention the user is scheduled to meet a particular person for a lunch date (target). As the date approaches, the user's wearable device pulsates in sync with the target's footsteps.

In a last embodiment of the invention, the user needs to identify one of many moving robots (target) in a factory.
The user's wearable device pulses in sync with the motion of the robot.

### Further Advantages:

Natural interaction by observing visually makes the system fun and easy to use. The user does not have to use hands or eyes to interact with a computing device to help him find the target. The method is discreet for the user because other people cannot observe when the wearable provides haptic feedback, thus, they cannot easily detect which target the user is finding.

## Claims

1. Method for improved finding someone or something within a larger group of people or things comprising
- providing a user (A) with a first smart device (DA) and a target (T) to be found with a second smart device (DT);
- establishing a communication channel (CC) between the user (A) and the target (T) via a wireless connection;
- providing a visual cue at the target (T) which is visible to the user (A);
- sending a signal with parameters of this provided visual cue via the communication channel (CC) to the user (A), whenever a visual cue is generated;
- receiving the signal with parameters of the visual cue and producing a haptic cue at the first smart device of the user synchronous to the visual cue; and
- supporting the identification of the target by identifying synchronous cues.

2. Method according to claim 1,
- wherein the sent parameters are additionally indicating an intensity of a motion of the visual cue being provided by the target and are adjusting the intensity of the haptic sensation of the user to the intensity of the visual cue from the target.

3. Method according to claim 1 or 2,
- wherein the sent parameters are additionally indicating a direction of a motion of the visual cue being provided by the target and
- wherein adjusting the haptic sensation of the user to the direction of the motion of the visual cue in a way that two haptic feedback actuators (VIB) with different locations or directions are used.

4. Computer program product comprising computer executable instructions, which when loaded on the first and second smart device, provides the first and second smart device with the functionality of the method according to any one of the preceding claims.

5. A synchronization device (VCS) for implementing the method for improved finding someone or something within a larger group of people or things as in claim 1 **characterized in that** it either contains at least
- a illumination source (IL) which induces a visual cue at the target by blinking or otherwise changing illumination; or
- a motion detector (MD) which observes a visual cue of the target; and
**in that** it contains a device for sending a signal over the communication channel (CC) to the user, whenever it registers a visual cue at the target.
